# EUROPEAN PATENT APPLICATION

(11) **EP 4 583 287 A1**
(43) Date of publication of application: **09.07.2025**
(21) Application number: 23879957.1
(22) Date of filing: 26.07.2023
(51) Int. Cl.: H01M 50/291, H01M 50/24

(54) **BATTERY MODULE WITH SEALED STRUCTURE**

(30) Priority: 21.10.2022 KR 20220136649
(71) Applicant: SK On Co., Ltd., Seoul 03161 (KR)
(72) Inventor: CHANG, Tae Hyun, Daejeon 34124 (KR); KIM, Suk Chul, Daejeon 34124 (KR); KIM, Yong Uk, Daejeon 34124 (KR); KIM, Yun Hee, Daejeon 34124 (KR); PARK, Byung Jun, Daejeon 34124 (KR); SEOK, Jong Ho, Daejeon 34124 (KR); HAN, Dong Hwa, Daejeon 34124 (KR)
(74) Representative: Prüfer & Partner mbB Patentanwälte · Rechtsanwälte
(86) International application number: PCT/KR2023/010815
(87) International publication number: WO 2024/085374

(57) **Abstract**

The present disclosure relates to a battery module. The battery module according to an embodiment of the present disclosure may include first and second end plates disposed on both sides of a plurality of battery assemblies and a support bar connecting the first and second end plates.

## Description

### [Technical Field]

The present disclosure relates to a battery module with a sealed structure. More particularly, the present disclosure relates to a battery module with a sealed structure including a plurality of battery assemblies.

### [Background Art]

Generally, when a fire occurs inside a battery module, a battery pack, an energy storage system (ESS), etc., the fire is extinguished using a fire extinguishing equipment. A method of extinguishing the fire using the fire extinguishing equipment is to inject water or a fire extinguishing agent into an ignition source through a sprinkler, a water cooling pipe, etc. To this end, the fire extinguishing equipment can be provided inside or outside the battery module, the battery pack, the energy storage system, etc.

Alternatively, the fire can be extinguished through a sealed structure. A method of extinguishing the fire through the sealed structure is to extinguish the fire by blocking the inflow of oxygen. To this end, the sealed structure can be applied to the battery module, the battery pack, the energy storage system, etc.

### [Disclosure]

### [Technical Problem]

An aspect of the present disclosure can smothering extinguish a fire occurring inside a battery assembly.

An aspect of the present disclosure can seal a battery assembly by pressurizing the battery assembly using a support bar.

An aspect of the present disclosure can pressurize a plurality of battery assemblies by a pad or a spacer disposed between two adjacent battery assemblies of the plurality of battery assemblies.

### [Technical Solution]

A battery module according to the present disclosure may comprise a plurality of battery assemblies stacked in one direction, a first end plate and a second end plate that are respectively disposed on both sides of the plurality of battery assemblies in the one direction, and a first support bar connecting the first end plate to the second end plate, each of the plurality of battery assemblies may include a battery cell, a case accommodating the battery cell, an opening being formed in a side of the case, and a first support member coupled to the opening, and the first support bar may be disposed adjacent to the opening of the case and may pressurize the first end plate and the second end plate.

### [Advantageous Effects]

According to an aspect of the present disclosure, a battery module smothering extinguishing a fire occurring in a battery cell can be provided.

According to an aspect of the present disclosure, a battery module with a structure sealing a battery cell by a compressive force from a support bar can be provided.

According to an aspect of the present disclosure, a battery module including a pad or a spacer that is disposed between two adjacent battery assemblies of a plurality of battery assemblies to pressurize the battery assemblies can be provided.

### [Description of Drawings]

FIGS. 1 and 2 illustrate a battery module 10 according to an embodiment of the present disclosure.
FIG. 3 is a cross-sectional view of the battery module 10 of FIG. 2 taken along A-A'.
FIG. 4 is a cross-sectional view illustrating a battery assembly 100 of FIG. 3.
FIG. 5 is a cross-sectional view illustrating a case 110 of the battery assembly 100 of FIG. 4.
FIG. 6 is a cross-sectional view illustrating a first support member 130 of the battery assembly 100 of FIG. 4.
FIG. 7 is a cross-sectional view illustrating a first pad 610 of a pad 600 of FIG. 3.
FIG. 8 is a cross-sectional view illustrating a second pad 620 of the pad 600 of FIG. 3.
FIG. 9 is a cross-sectional view illustrating a first spacer 710 of a spacer 700 of FIG. 3.
FIG. 10 illustrates a housing 200 of FIG. 2 (including the battery assembly 100).
FIG. 11 illustrates an end plate 300 coupled to the housing 200 and first and second support bars 400 and 500 of FIG. 2.
FIG. 12 illustrates surface pressure areas C1, C2, C3 and C4 of the first support bar 500 coupled to the end plate 300 of FIG. 11.
FIG. 13 enlargedly illustrates a part B of FIG. 2.

### [Mode for Invention]

Reference will now be made in detail to embodiments of the present disclosure, examples of which are illustrated in the accompanying drawings. However, the following description is merely an example and does not intend to limit the present disclosure to a specific implementation.

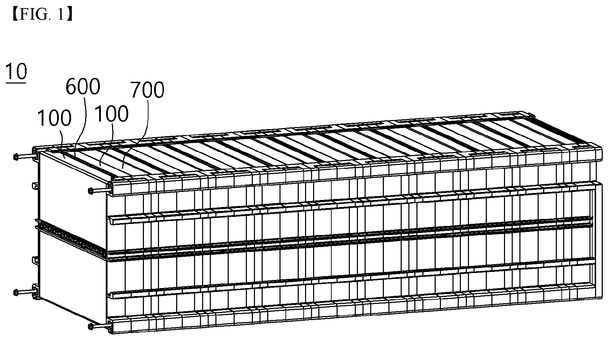

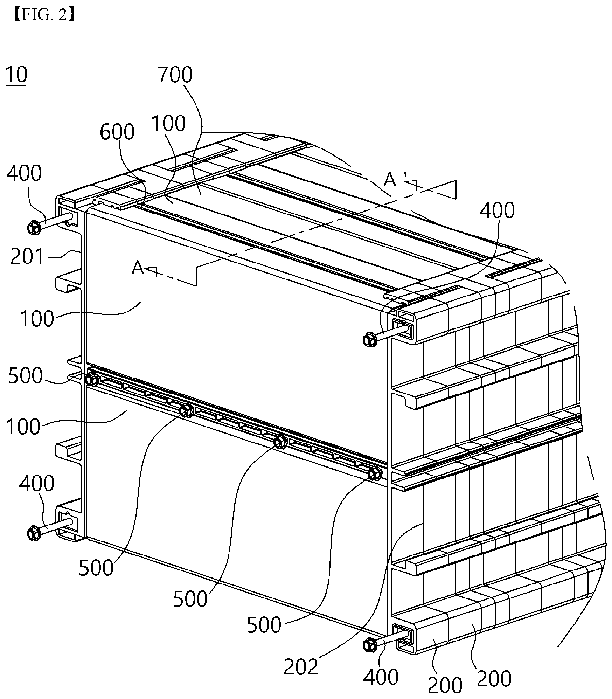

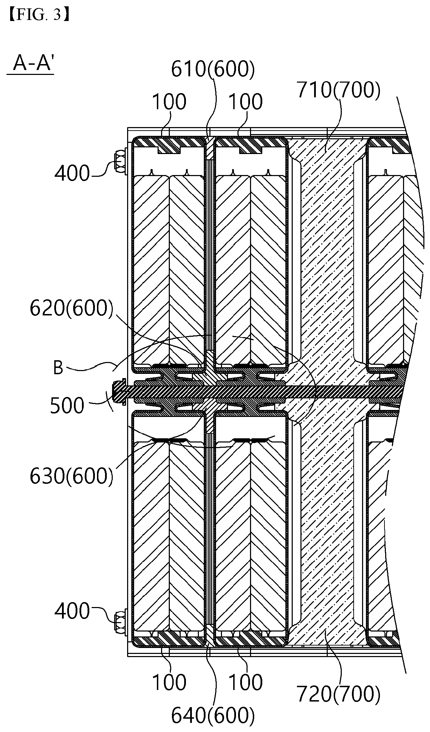

FIGS. 1 and 2 illustrate a battery module 10 according to an embodiment of the present disclosure. FIG. 3 is a cross-sectional view of the battery module 10 of FIG. 2 taken along A-A'.

The battery module 10 may include a battery assembly 100. The battery module 10 may include a plurality of battery assemblies 100.

The battery module 10 may include a housing 200. The housing 200 may extend from an end 201 to another end 202. For example, the end 201 of the housing 200 may be a left end of the housing 200, and the another end 202 of the housing 200 may be a right end of the housing 200. A longitudinal direction of the housing 200 may be a left-right direction.

The housing 200 may accommodate the battery assembly 100. The housing 200 may accommodate the plurality of battery assemblies 100. For example, the housing 200 may accommodate the battery assemblies 100 respectively arranged on an upper side and a lower side of the housing 200. The housing 200 may be in close contact with the front and the rear of the battery assemblies 100.

The battery module 10 may include a plurality of housings 200. The plurality of housings 200 may be stacked facing each other in one direction. For example, the plurality of housings 200 may be stacked facing each other in a front-rear direction. Hence, the plurality of battery assemblies 100 may be stacked facing each other in the front-rear direction. The plurality of battery assemblies 100 stacked in the front-rear direction may be referred to as a battery group. The battery groups may be stacked in an up-down direction. For example, the battery groups may be stacked in two rows in the up-down direction.

The front-rear direction may indicate a direction in which the housings 200 or the battery assemblies 100 are stacked, the up-down direction may indicate a direction in which the battery groups are stacked, and the left-right direction may indicate the longitudinal direction of the housing 200.

The battery module 10 may include first and second support bars 400 and 500. The first and second support bars 400 and 500 may each include a bolt and a nut (not shown). The first and second support bars 400 and 500 may be coupled to the plurality of housings 200. The first and second support bars 400 and 500 may be bolt-fastened by penetrating the plurality of housings 200 in the front-rear direction. The first and second support bars 400 and 500 may pressurize the plurality of housings 200 in the front-back direction.

The first support bar 500 may be disposed between two battery assemblies 100 arranged in the up-down direction. The first support bar 500 may pressurize the plurality of battery assemblies 100 in the front-rear direction.

The battery module 10 may include a pad 600 and a spacer 700. The pad 600 or the spacer 700 may be disposed between two adjacent housings 200 of the plurality of housings 200. For example, the pad 600 and the spacer 700 may be alternately arranged in the front-rear direction.

The pad 600 may include first, second, third and fourth pads 610, 620, 630 and 640. The first, second, third and fourth pads 610, 620, 630 and 640 may extend in the left-right direction. The first, second, third and fourth pads 610, 620, 630 and 640 may be disposed between two battery assemblies 100 adjacent in the front-rear direction. The first, second, third and fourth pads 610, 620, 630 and 640 may be arranged to be spaced apart from each other in the up-down direction.

The first and second pads 610 and 620 may be in contact with the battery assembly 100 disposed on an upper portion of the housing 200. The first pad 610 may be in contact with an upper side of the battery assembly 100 positioned on the upper portion of the housing 200, and the second pad 620 may be in contact with a lower side of the battery assembly 100 positioned on the upper portion of the housing 200.

The third and fourth pads 630 and 640 may be in contact with the battery assembly 100 positioned on a lower portion of the housing 200. The third pad 630 may be in contact with an upper side of the battery assembly 100 positioned on the lower portion of the housing 200, and the fourth pad 640 may be in contact with a lower side of the battery assembly 100 positioned on the lower portion of the housing 200.

The first support bar 500 may be disposed between the second pad 620 and the third pad 630. When the first support bar 500 pressurizes the plurality of battery assemblies 100 in the front-rear direction, the first, second, third and fourth pads 610, 620, 630 and 640 may be in close contact with the battery assemblies 100. The first pad 610 and the fourth pad 640 may be formed symmetrically in the up-down direction based on the first support bar 500. The second pad 620 and the third pad 630 may be formed symmetrically in the up-down direction based on the first support bar 500.

The spacer 700 may include first and second spacers 710 and 720. The first and second spacers 710 and 720 may extend in the left-right direction. The first and second spacers 710 and 720 may be disposed between two battery assemblies 100 adjacent in the front-rear direction. The first and second spacers 710 and 720 may be arranged to be spaced apart from each other in the up-down direction.

The first spacer 710 may be in contact with the battery assembly 100 positioned on the upper portion of the housing 200. For example, the first spacer 710 may be in contact with the upper side and the lower side of the battery assembly 100 positioned on the upper portion of the housing 200.

The second spacer 720 may be in contact with the battery assembly 100 positioned on the lower portion of the housing 200. For example, the second spacer 720 may be in contact with the upper side and the lower side of the battery assembly 100 positioned on the lower portion of the housing 200.

The first support bar 500 may be disposed between the first spacer 710 and the second spacer 720. When the first support bar 500 pressurizes the plurality of battery assemblies 100 in the front-rear direction, the first spacer 710 and the second spacer 720 may be in close contact with the battery assemblies 100. The first and second spacers 710 and 720 may be formed symmetrically in the up-down direction based on the first support bar 500.

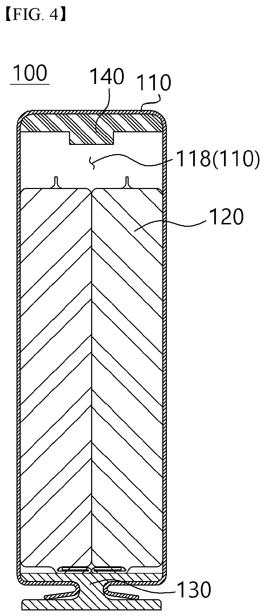

FIG. 4 is a cross-sectional view illustrating the battery assembly 100 of FIG. 3. The battery assembly 100 of FIG. 4 indicates one of the battery assemblies 100 positioned on the upper portion of the housing 200.

The battery assembly 100 may include a case 110. The case 110 may extend in the longitudinal direction of the housing 200 (see FIG. 2). The case 110 may form an opening 119 in which a portion of a lower portion is open. The case 110 may form an internal space 118 communicating with the opening 119.

The battery assembly 100 may include a battery cell 120. The battery cell 120 may extend in a direction parallel to the longitudinal direction of the housing 200. The battery assembly 100 may include a plurality of battery cells 120. The plurality of battery cells 120 may be stacked facing each other in the front-rear direction.

The plurality of battery cells 120 may be accommodated in the internal space 118 of the case 110. For example, the case 110 may accommodate two battery cells 120. The case 110 may include a metal material and thus may be a cooling plate dissipating heat generated from the battery cells 120.

The battery assembly 100 may include a first support member 130. The first support member 130 may extend in the direction parallel to the longitudinal direction of the housing 200. The first support member 130 may be coupled to the opening 119 of the case 110. The first support member 130 may block the opening 119 of the case 110. A portion of the first support member 130 may be inserted into the internal space 118 of the case 110 to maintain and support a shape of a lower side of the case 110.

The battery assembly 100 may include a second support member 140. The second support member 140 may extend in the direction parallel to the longitudinal direction of the housing 200. The second support member 140 may be accommodated in the internal space 118 of the case 110 and may be positioned on an upper side of the internal space 118. The second support member 140 may maintain and support a shape of an upper side of the case 110.

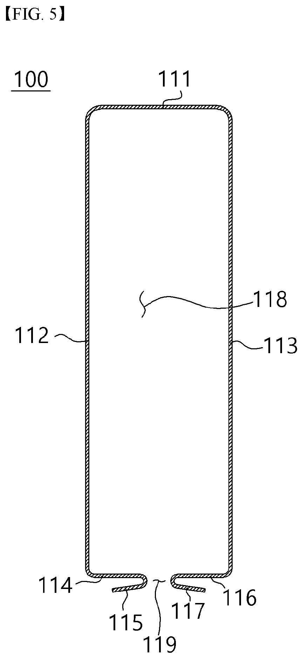

FIG. 5 is a cross-sectional view illustrating the case 110 of the battery assembly 100 of FIG. 4.

The case 110 may include a horizontal member 111. The horizontal member 111 may extend in a direction in which the battery assemblies 100 are stacked. For example, the horizontal member 111 may extend in the front-rear direction. A width direction of the horizontal member 111 may be the front-rear direction.

The case 110 may include first and second vertical members 112 and 113. The first and second vertical members 112 and 113 may extend downward from both sides of the horizontal member 111 in the width direction of the horizontal member 111, respectively. For example, the first vertical member 112 may extend downward from a front end of the horizontal member 111, and the second vertical member 113 may extend downward from a rear end of the horizontal member 111. A thickness direction of the first and second vertical members 112 and 113 may be a direction parallel to a direction in which the housings 200 are stacked.

A portion where the horizontal member 111 and the first vertical member 112 are connected may include a curved surface. A portion where the horizontal member 111 and the second vertical member 113 are connected may include a curved surface.

The case 110 may include a first wing member 114. The first wing member 114 may extend from a lower end of the first vertical member 112 toward the second vertical member 113. An end of the first wing member 114 may be connected to the lower end of the first vertical member 112, and another end of the first wing member 114 may be directed toward the second vertical member 113. A portion where the first vertical member 112 and the first wing member 114 are connected may include a curved surface.

The case 110 may include a first elastic member 115. The first elastic member 115 may be formed by bending downward from the another end of the first wing member 114 and extending in a direction away from the second vertical member 113. For example, the first elastic member 115 may form an acute angle with the first wing member 114. An end of the first elastic member 115 may be connected to the another end of the first wing member 114, and another end of the first elastic member 115 may be in contact with the first support member 130 (see FIG. 4).

The case 110 may include a second wing member 116. The second wing member 116 may extend from a lower end of the second vertical member 113 toward the first vertical member 112. An end of the second wing member 116 may be connected to the lower end of the second vertical member 113, and another end of the second wing member 116 may be directed toward the first vertical member 112. A portion where the second vertical member 113 and the second wing member 116 are connected may include a curved surface.

The another end of the first wing member 114 and the another end of the second wing member 116 may be spaced apart from each other. The opening 119 may be formed between the another end of the first wing member 114 and the another end of the second wing member 116.

The case 110 may include a second elastic member 117. The second elastic member 117 may be formed by bending downward from the another end of the second wing member 116 and extending in a direction away from the first vertical member 112. For example, the second elastic member 117 may form an acute angle with the second wing member 116. An end of the second elastic member 117 may be connected to the another end of the second wing member 116, and another end of the second elastic member 117 may be in contact with the first support member 130 (see FIG. 4).

The first wing member 114 and the first elastic member 115 may be referred to as a first clip. The second wing member 116 and the second elastic member 117 may be referred to as a second clip. The first and second clips may be coupled to the first support member 130 (see FIG. 4).

Each of the horizontal member 111, the first and second vertical members 112 and 113, the first and second wing members 114 and 116, and the first and second elastic members 115 and 117 may have the shape of a plate that extends in the direction parallel to the longitudinal direction of the housing 200. The case 110 may be surrounded by the horizontal member 111, the first and second vertical members 112 and 113, the first and second wing members 114 and 116, and the first and second elastic members 115 and 117 and may include the internal space 118 connected to the opening 119.

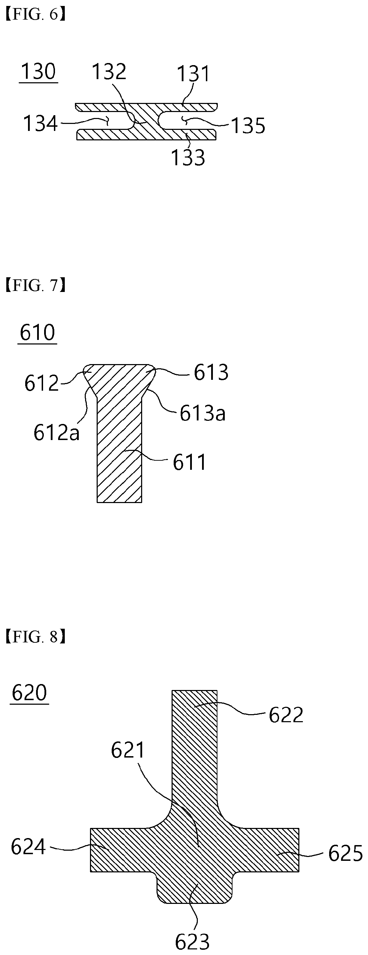

FIG. 6 is a cross-sectional view illustrating the first support member 130 of the battery assembly 100 of FIG. 4. The first support member 130 may be coupled to the lower side of the case 110 (see FIG. 5).

The first support member 130 may include a first plate 131. The first plate 131 may extend in a direction parallel to the direction in which the housings 200 are stacked. The first plate 131 may be inserted into a lower side of the internal space 118 of the case 110 (see FIG. 5).

The first plate 131 may be disposed adjacent to the first support bar 500 (see FIG. 3). That is, a portion where the case 110 is coupled to the first plate 131 may be disposed adjacent to the first support bar 500. Hence, the first support bar 500 may effectively pressurize the lower side of the case 110 and the first plate 131.

The first plate 131 may be in contact with an inner face of the first vertical member 112 and an inner face of the second vertical member 113 of the case 110. When the first support bar 500 pressurizes the first vertical member 112 and the second vertical member 113, the first plate 131 can maintain and support the shape of the lower side of the case 110.

A lower face of the first plate 131 may be in contact with an upper face of the first wing member 114 and an upper face of the second wing member 116 of the case 110. The first plate 131 can prevent a leakage of gas generated in the internal space 118 of the case 110 by being in contact with the case 110. Hence, when a fire occurs in the battery assembly 100 (see FIG. 3), a sealed structure of the battery assembly 100 can be maintained. If oxygen does not flow into the battery assembly 100 due to the sealed structure, the spread of the fire can be prevented.

The first support member 130 may include a connection member 132. The connection member 132 may extend downward from the first plate 131. The connection member 132 may penetrate between the first wing member 114 and the second wing member 116 of the case 110. The connection member 132 may pass through the opening 119. The connection member 132 may extend to the outside of the case 110.

The first support member 130 may include a second plate 133. The second plate 133 may extend from a lower end of the connection member 132 in the direction parallel to the direction in which the housings 200 are stacked. The second plate 133 may be arranged to be spaced apart from the first plate 131. The second plate 133 may be disposed outside the case 110.

The first support member 130 may include a first insertion groove 134. The first insertion groove 134 may be positioned between the first plate 131 and the second plate 133 and may be formed concavely toward the connection member 132. For example, the first insertion groove 134 may be penetrated in the left-right direction, and a front of the first insertion groove 134 may be open. The first wing member 114 and the first elastic member 115 of the case 110 may be coupled to the first insertion groove 134. In other words, the first clip of the case 110 may be coupled to the first insertion groove 134.

Before the first clip is coupled to the first insertion groove 134, a distance from the upper face of the first wing member 114 to a lower end of the first elastic member 115 may be greater than a distance from the lower face of the first plate 131 to an upper face of the second plate 133. Hence, when the first wing member 114 and the first elastic member 115 are coupled to the first insertion groove 134, the first elastic member 115 may be compressed toward the first wing member 114, and the lower end of the first elastic member 115 may be in close contact with the upper face of the second plate 133. The first elastic member 115 and the second plate 133 may seal the internal space 118 of the case 110.

The first support member 130 may include a second insertion groove 135. The second insertion groove 135 may be positioned between the first plate 131 and the second plate 133 and may be formed concavely toward the connection member 132. For example, the second insertion groove 135 may be penetrated in the left-right direction, and a rear of the second insertion groove 135 may be open. The second wing member 116 and the second elastic member 117 of the case 110 may be coupled to the second insertion groove 135. In other words, the second clip of the case 110 may be coupled to the second insertion groove 135.

Each of the case 110 and the first support member 130 may be formed symmetrically in the direction in which the housings 200 are stacked. Accordingly, the second elastic member 117 and the second plate 133 can also seal the internal space 118 of the case 110 using the same principle as the first elastic member 115 and the second plate 133.

FIG. 7 is a cross-sectional view illustrating the first pad 610 of the pad 600 of FIG. 3. The first pad 610 may be disposed between two cases 110 (see FIGS. 3 and 5) adjacent in the front-rear direction. The two adjacent cases 110 may be spaced apart from each other by a predetermined distance by the first pad 610.

The first pad 610 may include a first pad body 611. The first pad body 611 may extend in the up-down direction. The first pad body 611 may be in contact with the first vertical member 112 of the case 110 positioned in rear of the first pad 610 and may be in contact with the second vertical member 113 of the case 110 positioned in front of the first pad 610. The first pad body 611 may be formed to correspond to shapes of the first vertical member 112 and the second vertical member 113 that are in contact with the first pad body 611. A thickness direction of the first pad body 611 may be a direction parallel to the direction in which the housings 200 are stacked.

The first pad 610 may include first and second projections 612 and 613. Each of the first and second projections 612 and 613 may protrude from an upper side of the first pad body 611 in the direction in which the housings 200 are stacked. For example, the first projection 612 may protrude forward from the upper side of the first pad body 611, and the second projection 613 may protrude rearward from the upper side of the first pad body 611.

The first projection 612 may include a first contact face 612a. The first contact face 612a may be in contact with a portion where the horizontal member 111 and the second vertical member 113 of the case 110 disposed in the front of the first pad 610 are connected. The first contact face 612a may be formed to correspond to shapes of the horizontal member 111 and the second vertical member 113 that are in contact with the first contact face 612a.

The second projection 613 may include a second contact face 613a. The second contact face 613a may be in contact with a portion where the horizontal member 111 and the first vertical member 112 of the case 110 disposed in the rear of the first pad 610 are connected. The second contact face 613a may be formed to correspond to shapes of the horizontal member 111 and the first vertical member 112 that are in contact with the second contact face 613a.

FIG. 8 is a cross-sectional view illustrating the second pad 620 of the pad 600 of FIG. 3. The second pad 620 may be disposed between two adjacent cases 110 (see FIGS. 3 and 5) in the front-rear direction and two adjacent first support members 130 (see FIGS. 3 and 6) in the front-rear direction. The two adjacent cases 110 and the two adjacent first support members 130 may be spaced apart by a predetermined distance by the second pad 620.

The second pad 620 may include a central member 621. The central member 621 may be disposed between the two adjacent first support members 130.

The second pad 620 may include a first protrusion 622. The first protrusion 622 may extend upward from the central member 621. The first protrusion 622 may be disposed between the first plates 131 of the two adjacent first support members 130. The first protrusion 622 may be in contact with the first vertical member 112 of the case 110 positioned in rear of the second pad 620 and may be in contact with the second vertical member 113 of the case 110 positioned in front of the second pad 620. The first protrusion 622 may be formed to correspond to the shapes of the first vertical member 112 and the second vertical member 113 that are in contact with the first protrusion 622. A thickness direction of the first protrusion 622 may be a direction parallel to the direction in which the housings 200 are stacked. A thickness of the first protrusion 622 may be the same as a thickness of the first pad body 611 (see FIG. 7).

The first protrusion 622 may pressurize rearward the first vertical member 112 of the case 110 positioned in the rear of the second pad 620. As a result, the first vertical member 112 may be in close contact with the first plate 131 of the first support member 130 that is in contact with the first vertical member 112.

The first protrusion 622 may pressurize forward the second vertical member 113 of the case 110 positioned in the front of the second pad 620. As a result, the second vertical member 113 may be in close contact with the first plate 131 of the first support member 130 that is in contact with the second vertical member 113.

The second pad 620 may include a second protrusion 623. The second protrusion 623 may extend downward from the central member 621. The second protrusion 623 may be disposed between the second plates 133 of the two adjacent first support members 130. The second protrusion 623 may be in contact with the second plates 133 of the first support members 130 positioned in the front and rear of the second pad 620. A thickness direction of the second protrusion 623 may be a direction parallel to the direction in which the housings 200 are stacked.

The second pad 620 may include a third protrusion 624. The third protrusion 624 may extend forward from the central member 621. The third protrusion 624 may be inserted into the second insertion groove 135 of the first support member 130 positioned in the front of the second pad 620.

The third protrusion 624 may be inserted into the second insertion groove 135 and disposed between the second wing member 116 of the case 110 and the second plate 133 of the first support member 130. An upper face of the third protrusion 624 may be in contact with a lower face of the second wing member 116. A lower face of the third protrusion 624 may be in contact with the upper face of the second plate 133. The third protrusion 624 may pressurize the second wing member 116 toward the first plate 131 of the first support member 130. As a result, the second wing member 116 can be in close contact with the first plate 131.

The second pad 620 may include a fourth protrusion 625. The fourth protrusion 625 may extend rearward from the central member 621. The fourth protrusion 625 may be inserted into the first insertion groove 134 of the first support member 130 positioned in the rear of the second pad 620.

The fourth protrusion 625 may be inserted into the first insertion groove 134 and disposed between the first wing member 114 of the case 110 and the second plate 133 of the first support member 130. An upper face of the fourth protrusion 625 may be in contact with a lower face of the first wing member 114. A lower face of the fourth protrusion 625 may be in contact with the upper face of the second plate 133. The fourth protrusion 625 may pressurize the first wing member 114 toward the first plate 131 of the first support member 130. As a result, the first wing member 114 can be in close contact with the first plate 131.

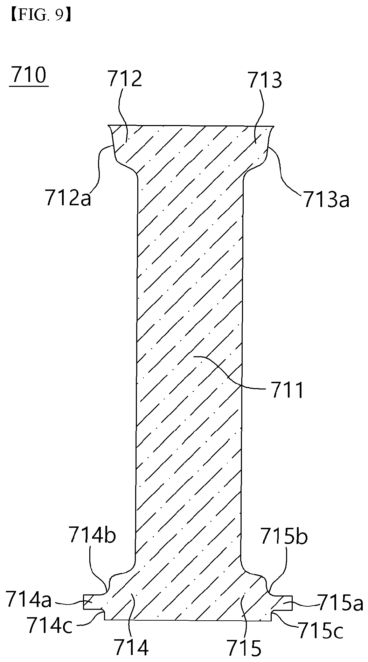

FIG. 9 is a cross-sectional view illustrating the first spacer 710 of the spacer 700 of FIG. 3. The first spacer 710 may be disposed between two battery assemblies 100 (see FIG. 3) adjacent in the front-rear direction. The two adjacent battery assemblies 100 may be spaced apart by a predetermined distance by the first spacer 710.

An upper side of the first spacer 710 may be in contact with the upper side of the battery assembly 100, and a lower side of the first spacer 710 may be in contact with the lower side of the battery assembly 100. The first spacer 710 may wrap the front or rear of the battery assembly 100 from its upper side to lower side. The first spacer 710 may be used as a firewall.

The first spacer 710 may include a spacer body 711. The spacer body 711 may extend in the up-down direction. The spacer body 711 may be disposed between the two adjacent battery assemblies 100. The spacer body 711 may be spaced apart from the two adjacent battery assemblies 100.

A thickness direction of the spacer body 711 may be a direction parallel to the direction in which the housings 200 are stacked. A thickness of the spacer body 711 may be greater than the thickness of the first pad body 611 of the first pad 610 or the thickness of the first protrusion 622 of the second pad 620.

The first spacer 710 may include third and fourth projections 712 and 713. The third and fourth projections 712 and 713 may protrude from an upper side of the spacer body 711 in the direction in which the housings 200 are stacked. For example, the third projection 712 may protrude forward from the upper side of the spacer body 711, and the fourth projection 713 may protrude rearward from the upper side of the spacer body 711.

The third projection 712 may include a first concave face 712a. The first concave face 712a may be in contact with a portion where the horizontal member 111 and the second vertical member 113 of the case 110 disposed in the front of the first spacer 710 are connected. The first concave face 712a may be formed to correspond to the shapes of the horizontal member 111 and the second vertical member 113 that are in contact with the first concave face 712a.

The fourth projection 713 may include a second concave face 713a. The second concave face 713a may be in contact with a portion where the horizontal member 111 and the first vertical member 112 of the case 110 disposed in the rear of the first spacer 710 are connected. The second concave face 713a may be formed to correspond to the shapes of the horizontal member 111 and the first vertical member 112 that are in contact with the second concave face 713a.

The first spacer 710 may include fifth and sixth projections 714 and 715. Each of the fifth and sixth projections 714 and 715 may protrude from a lower side of the spacer body 711 in the direction in which the housings 200 are stacked. For example, the fifth projection 714 may protrude forward from the lower side of the spacer body 711, and the sixth projection 715 may protrude rearward from the lower side of the spacer body 711. The fifth projection 714 may be in contact with the battery assembly 100 positioned in the front of the first spacer 710, and the sixth projection 715 may be in contact with the battery assembly 100 positioned in the rear of the first spacer 710.

The fifth projection 714 may include a fifth protrusion 714a. The fifth protrusion 714a may extend forward from the fifth projection 714. The fifth protrusion 714a may be inserted into the second insertion groove 135 of the first support member 130 positioned in the front of the first spacer 710.

The fifth protrusion 714a may be disposed between the second wing member 116 of the case 110 inserted into the second insertion groove 135 and the second plate 133 of the first support member 130. An upper face of the fifth protrusion 714a may be in contact with the lower face of the second wing member 116 of the case 110. A lower face of the fifth protrusion 714a may be in contact with the upper face of the second plate 133 of the first support member 130. The fifth protrusion 714a may pressurize the second wing member 116 toward the first plate 131 of the first support member 130. As a result, the second wing member 116 can be in close contact with the first plate 131.

The fifth projection 714 may include a third concave face 714b. The third concave face 714b may form a part of the upper face of the fifth protrusion 714a. The third concave face 714b may be in contact with a portion where the second vertical member 113 and the second wing member 116 of the case 110 disposed in the front of the first spacer 710 are connected. The third concave face 714b may be formed to correspond to the shapes of the second vertical member 113 and the second wing member 116 that are in contact with the third concave face 714b.

The fifth projection 714 may include a fourth concave face 714c. The fourth concave face 714c may form a part of the lower face of the fifth protrusion 714a. The fourth concave face 714c may be in contact with the second plate 133 of the first support member 130 disposed in the front of the first spacer 710. The fourth concave face 714c may be formed to correspond to the shape of the second plate 133 that is in contact with the fourth concave face 714c.

The sixth projection 715 may be formed symmetrically with the fifth projection 714 in the direction in which the housings 200 are stacked.

The sixth projection 715 may include a sixth protrusion 715a. The sixth protrusion 715a may extend rearward from the sixth projection 715. The sixth protrusion 715a may be inserted into the first insertion groove 134 of the first support member 130 disposed in the rear of the first spacer 710. The sixth protrusion 715a may bring the first plate 131 of the first support member 130 into contact with the first wing member 114 in the same principle as the fifth protrusion 714a.

The sixth projection 715 may include a fifth concave face 715b. The fifth concave face 715b may form a portion of an upper face of the sixth protrusion 715a. The fifth concave face 715b may be in contact with a portion where the first vertical member 112 and the first wing member 114 of the case 110 disposed in the rear of the first spacer 710 are connected. The fifth concave face 715b may be formed to correspond to the shapes of the first vertical member 112 and the first wing member 114 that are in contact with the fifth concave face 715b.

The sixth projection 715 may include a sixth concave face 715c. The sixth concave face 715c may form a portion of a lower face of the sixth protrusion 715a. The sixth concave face 715c may be in contact with the second plate 133 of the first support member 130 disposed in the rear of the first spacer 710. The sixth concave face 715c may be formed to correspond to the shape of the second plate 133 that is in contact with the sixth concave face 715c.

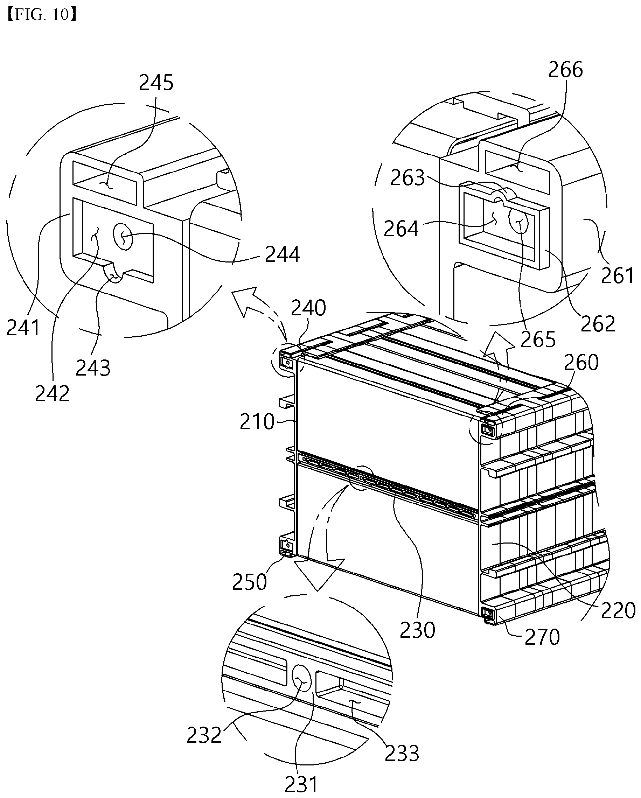

FIG. 10 illustrates the housing 200 of FIG. 2.

The housing 200 may include a first vertical plate 210. The first vertical plate 210 may be disposed at the end 201 of the housing 200. The first vertical plate 210 may extend in the up-down direction.

The housing 200 may include a second vertical plate 220. The second vertical plate 220 may be disposed at the another end 202 of the housing 200. The second vertical plate 220 may face the first vertical plate 210. The second vertical plate 220 may extend in the up-down direction.

The housing 200 may include a connection plate 230. The connection plate 230 may connect the first vertical plate 210 to the second vertical plate 220. The connection plate 230 may extend in the longitudinal direction of the housing 200. The connection plate 230 may be disposed between the battery assembly 100 disposed on the upper portion of the housing 200 and the battery assembly 100 disposed on the lower portion of the housing 200.

The connection plate 230 may include a connection plate body 231. The connection plate body 231 may include a front face and a rear face.

The connection plate 230 may include a first through hole 232. The first through hole 232 may penetrate the connection plate body 231 in the direction in which the housings 200 are stacked. For example, the first through hole 232 may penetrate the connection plate body 231 in the front-rear direction. The first through holes 232 respectively formed in the plurality of housings 200 may communicate with each other. The first support bar 500 may be coupled to the first through hole 232. An inner diameter of the first through hole 232 may be greater than an outer diameter of the first support bar 500.

The connection plate 230 may include a plurality of first through holes 232. The plurality of first through holes 232 may be spaced apart from each other in the left-right direction. The connection plate 230 according to an embodiment of the present disclosure may include four first through holes 232.

The connection plate 230 may include a first via hole 233. The first via hole 233 may be formed concavely on the front face or the rear face of the connection plate body 231. The connection plate 230 may include a plurality of first via holes 233. The connection plate 230 may be made lightweight by the first via holes 233.

The housing 200 may include a first coupling portion 240. The first coupling portion 240 may extend left from an upper side of the first vertical plate 210. The housing 200 may include a second coupling portion 250. The second coupling portion 250 may extend left from a lower side of the first vertical plate 210. The first coupling portion 240 may be formed symmetrically with the second coupling portion 250 in the up-down direction.

The first coupling portion 240 may include a first coupling portion body 241. The first coupling portion body 241 may include a front face and a rear face.

The first coupling portion 240 may include a first fitting groove 242. The first fitting groove 242 may be formed concavely on the front face of the first coupling portion body 241. For example, the first fitting groove 242 may be formed in a rectangular shape.

The first coupling portion 240 may include a second fitting groove 243. The second fitting groove 243 may be formed concavely on the front face of the first coupling portion body 241. The second fitting groove 243 may communicate with a lower side of the first fitting groove 242. The second fitting groove 243 may have a shape that is concavely recessed downward from the first fitting groove 242.

The first coupling portion 240 may include a second through hole 244. The second through hole 244 may penetrate the first coupling portion body 241 in the direction in which the housings 200 are stacked. For example, the second through hole 244 may penetrate the first coupling portion body 241 in the front-rear direction. The second through hole 244 may communicate with the first fitting groove 242. The second through holes 244 respectively formed in the plurality of housings 200 may communicate with each other. The second support bar 400 may be coupled to the second through hole 244. An inner diameter of the second through hole 244 may be greater than an outer diameter of the second support bar 400.

Since the second coupling portion 250 is formed symmetrically with the first coupling portion 240 in the up-down direction, the second coupling portion 250 may include a through hole formed symmetrically with the second through hole 244 in the up-down direction. The second support bar 400 may be coupled to the through hole of the second coupling portion 250.

The first coupling portion 240 may include a second via hole 245. The second via hole 245 may be formed concavely on the front face of the first coupling portion body 241. The first coupling portion 240 may be made lightweight by the second via hole 245.

The housing 200 may include a third coupling portion 260. The third coupling portion 260 may extend right from an upper side of the second vertical plate 220. The housing 200 may include a fourth coupling portion 270. The fourth coupling portion 270 may extend right from a lower side of the second vertical plate 220. The third coupling portion 260 may be formed symmetrically with the fourth coupling portion 270 in the up-down direction.

The third coupling portion 260 may include a third coupling portion body 261. The third coupling portion body 261 may include a front face and a rear face.

The third coupling portion 260 may include a first fitting protrusion 262. The first fitting protrusion 262 may protrude from the front face of the third coupling portion body 261. For example, the first fitting protrusion 262 may be formed in a rectangular shape.

The third coupling portion 260 may include a second fitting protrusion 263. The second fitting protrusion 263 may protrude from the front face of the third coupling portion body 261. The second fitting protrusion 263 may be connected to the first fitting protrusion 262. The second fitting protrusion 263 may have a shape that protrudes upward from the first fitting protrusion 262.

The third coupling portion 260 may include a concave groove 264. The concave groove 264 may be concavely formed in a front face of the first fitting protrusion 262. Alternatively, the concave groove 264 may be concavely formed in the front face of the first fitting protrusion 262 and a front face of the second fitting protrusion 263.

The third coupling portion 260 may include a third through hole 265. The third through hole 265 may penetrate the third coupling portion body 261 in the direction in which the housings 200 are stacked. For example, the third through hole 265 may penetrate the third coupling portion body 261 in the front-rear direction. The third through hole 265 may communicate with the concave groove 264. The third through holes 265 respectively formed in the plurality of housings 200 may communicate with each other. The second support bar 400 may be coupled to the third through hole 265. An inner diameter of the third through hole 265 may be greater than the outer diameter of the second support bar 400.

Since the fourth coupling portion 270 is formed symmetrically with the third coupling portion 260 in the up-down direction, the fourth coupling portion 270 may include a through hole formed symmetrically with the third through hole 265 in the up-down direction. The second support bar 400 may be coupled to the through hole of the fourth coupling portion 270.

The third coupling portion 260 may include a third via hole 266. The third via hole 266 may be concavely formed on the front face of the third coupling portion body 261. The third coupling portion 260 may be made lightweight by the third via hole 266.

The first fitting groove 242 and the second fitting groove 243 of the first coupling portion 240 may be referred to as fitting grooves. The first fitting protrusion 262, the second fitting protrusion 263 and the concave groove 264 of the third coupling portion 260 may be referred to as fitting protrusions.

The first coupling portion 240 may include a fitting protrusion that is formed on the rear face of the first coupling portion body 241 and is formed symmetrically with the fitting protrusion of the third coupling portion 260 in the up-down direction. In the two adjacent housings 200 of the plurality of housings 200, the fitting protrusion of the first coupling portion 240 in one housing 200 may be coupled to the fitting groove of the first coupling portion 240 in the other housing 200.

The third coupling portion 260 may include a fitting groove that is formed on the rear face of the third coupling portion body 261 and is formed symmetrically with the fitting groove of the first coupling portion 240 in the up-down direction. In the two adjacent housings 200 of the plurality of housings 200, the fitting groove of the third coupling portion 260 in one housing 200 may be coupled to the fitting protrusion of the third coupling portion 260 in the other housing 200.

The housings 200 may be coupled to each other only in a predetermined direction due to the shapes of the first, second, third and fourth coupling portions 240, 250, 260 and 270. This can prevent the housings 200 from being coupled to each other in a wrong direction during manufacturing.

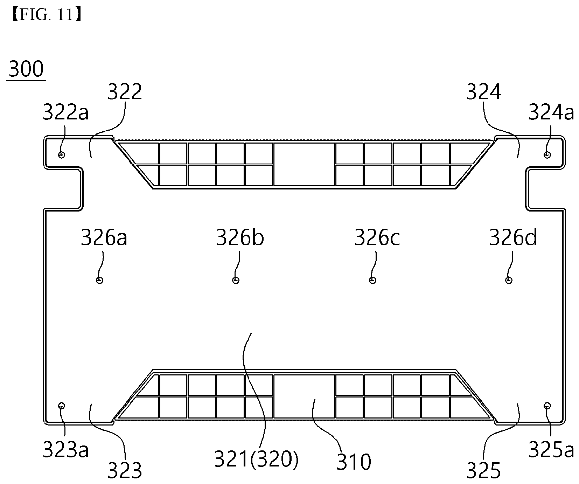

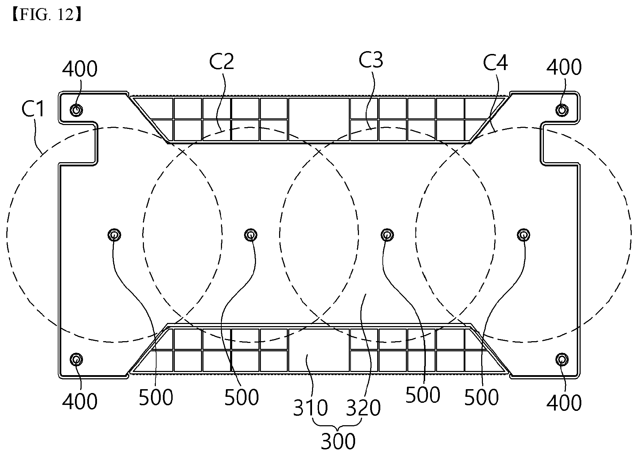

FIG. 11 illustrates an end plate 300 coupled to the housing 200 and the first and second support bars 400 and 500 of FIG. 2. FIG. 12 illustrates surface pressure areas C1, C2, C3 and C4 of the first support bar 500 coupled to the end plate 300 of FIG. 11.

A plurality of housings 200 may be referred to as a housing group. The end plates 300 may be respectively disposed in front and rear of the housing group in the direction in which the housings 200 are stacked. The end plates 300 and the housing group may be coupled by the first and second support bars 400 and 500. The following is described based on the end plates 300 disposed in the front of the housing group.

The end plate 300 may include a first end plate 310. The first end plate 310 may include a front face and a rear face. The rear face of the first end plate 310 may be in contact with the housing 200.

The end plate 300 may include a second end plate 320. The second end plate 320 may be in contact with the front face of the first end plate 310. The second end plate 320 may include a material with higher rigidity than a material of the first end plate 310.

The second end plate 320 may include a second end plate body 321. The second end plate body 321 may be disposed at the center of the first end plate 310.

The second end plate 320 may include first, second, third and fourth extensions 322, 323, 324 and 325. The first extension 322 may extend upward from a left side of the second end plate body 321. The second extension 323 may extend downward from the left side of the second end plate body 321. The third extension 324 may extend upward from a right side of the second end plate body 321. The fourth extension 325 may extend downward from the right side of the second end plate body 321.

The end plate 300 may include a first coupling hole 322a. The first coupling hole 322a may be disposed on the first extension 322. The first coupling hole 322a may be formed by penetrating the first and second end plates 310 and 320 in the direction in which the housings 200 are stacked. The first coupling hole 322a may communicate with the second through hole 244 of the first coupling portion 240 of the housing 200.

The end plate 300 may include a second coupling hole 323a. The second coupling hole 323a may be disposed on the second extension 323. The second coupling hole 323a may be formed by penetrating the first and second end plates 310 and 320 in the direction in which the housings 200 are stacked. The second coupling hole 323a may communicate with the through hole of the second coupling portion 250 of the housing 200.

The end plate 300 may include a third coupling hole 324a. The third coupling hole 324a may be disposed on the third extension 324. The third coupling hole 324a may be formed by penetrating the first and second end plates 310 and 320 in the direction in which the housings 200 are stacked. The third coupling hole 324a may communicate with the third through hole 265 of the third coupling portion 260 of the housing 200.

The end plate 300 may include a fourth coupling hole 325a. The fourth coupling hole 325a may be disposed on the fourth extension 325. The fourth coupling hole 325a may be formed by penetrating the first and second end plates 310 and 320 in the direction in which the housings 200 are stacked. The fourth coupling hole 325a may communicate with the through hole of the fourth coupling portion 270 of the housing 200.

The end plate 300 may include fifth, sixth, seventh and eighth coupling holes 326a, 326b, 326c and 326d. The fifth, sixth, seventh and eighth coupling holes 326a, 326b, 326c and 326d may be disposed on the second end plate body 321. The fifth, sixth, seventh and eighth coupling holes 326a, 326b, 326c and 326d may be spaced apart from each other in the left-right direction. The fifth, sixth, seventh and eighth coupling holes 326a, 326b, 326c and 326d may be formed by penetrating the first and second end plates 310 and 320 in the direction in which the housings 200 are stacked. Each of the fifth, sixth, seventh and eighth coupling holes 326a, 326b, 326c and 326d may correspond to the first through hole 232 of the housing 200. Each of the fifth, sixth, seventh and eighth coupling holes 326a, 326b, 326c and 326d may communicate with the first through hole 232 of the housing 200.

The battery module 10 may include the first and second support bars 400 and 500. The battery module 10 may include a plurality of first support bars 500 and a plurality of second support bars 400. Each of the first and second support bars 400 and 500 may include bolts and nuts. The end plate 300 and the plurality of housings 200 may be bolt-coupled by the first and second support bars 400 and 500.

The second support bar 400 may be coupled to the first coupling hole 322a and the second through hole 244 to couple the end plate 300 and the plurality of housings 200. The second support bar 400 may be coupled to the second coupling hole 323a and the through hole of the second coupling portion 250 to couple the end plate 300 and the plurality of housings 200. The second support bar 400 may be coupled to the third coupling hole 324a and the third through hole 265 to couple the end plate 300 and the plurality of housings 200. The second support bar 400 may be coupled to the fourth coupling hole 325a and the through hole of the fourth coupling portion 270 to couple the end plate 300 and the plurality of housings 200.

The first support bars 500 may be respectively coupled to the fifth, sixth, seventh and eighth coupling holes 326a, 326b, 326c and 326d, and the first through holes 232 respectively corresponding to the fifth, sixth, seventh and eighth coupling holes 326a, 326b, 326c and 326d to couple the end plate 300 and the plurality of housings 200.

When the end plate 300 and the plurality of housings 200 are bolt-coupled to the first support bars 500, a surface pressure area by the first support bar 500 may be formed on the end plate 300.

A surface pressure area of the first support bar 500 coupled to the fifth coupling hole 326a may be referred to as a first area C1. A surface pressure area of the first support bar 500 coupled to the sixth coupling hole 326b may be referred to as a second area C2. A surface pressure area of the first support bar 500 coupled to the seventh coupling hole 326c may be referred to as a third area C3. A surface pressure area of the first support bar 500 coupled to the eighth coupling hole 326d may be referred to as a fourth area C4.

Each of the first, second, third and fourth areas C1, C2, C3 and C4 may overlap with one or more areas of the first, second, third and fourth areas C1, C2, C3 and C4 except itself. The fifth, sixth, seventh and eighth coupling holes 326a, 326b, 326c and 326d may be arranged so that the first, second, third and fourth areas C1, C2, C3 and C4 overlap with each other. For example, the first area C1 may overlap with the second area C2, the second area C2 may overlap with the first area C1 and the third area C3, the third area C3 may overlap with the second area C2 and the fourth area C4, and the fourth area C4 may overlap with the third area C3. The surface pressure area of the first support bar 500 may be formed without a gap between two adjacent first support bars 500 of the plurality of first support bars 500. As a result, a portion of the battery module 10 adjacent to the first support bar 500 may be pressurized by the first support bar 500.

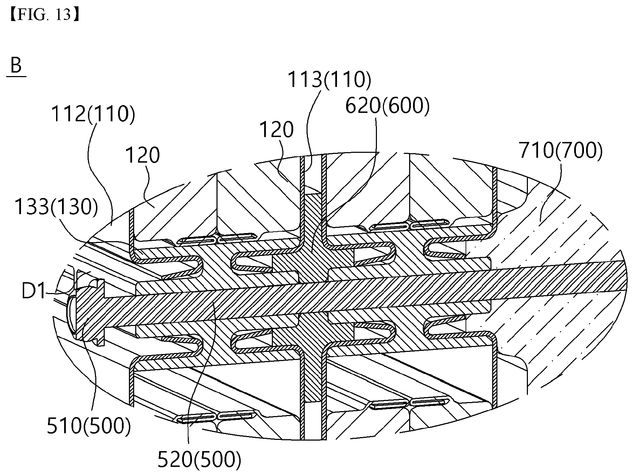

FIG. 13 enlargedly illustrates a part B of FIG. 2.

The first support bar 500 may include a head 510, a screw portion 520 extending from the head 510, and a nut (not shown) coupled to the screw portion 520. The end plate 300 (see FIG. 11) may be coupled between one of the two battery assemblies 100 positioned on the outside among the plurality of battery assemblies 100 and the head 510. The end plate 300 may be coupled between the other of the two battery assemblies 100 positioned on the outside among the plurality of battery assemblies 100 and the nut.

When the first support bar 500 is bolt-coupled and tightened to the two end plates 300, a force may act to bring the two end plates 300 closer to each other. That is, the first support bar 500 may pressurize the two end plates 300. When the two end plates 300 are pressurized, the plurality of battery assemblies 100, the plurality of housings 200, the pads 600, and the spacer 700 (see FIG. 3) may be pressurized. A direction in which the first support bar 500 pressurizes the two end plates 300 may be referred to as a first direction. A force acting in the first direction may include a compressive force acting in a direction parallel to the direction in which the housings 200 are stacked. For example, the first support bar 500 may pressurize the two end plates 300 in the front-rear direction.

When the battery cell 120 ignites and generates gas, the gas may exert a force to push the first vertical member 112 and the second vertical member 113 of the case 110 to generate a gap between the first vertical member 112 and the second vertical member 113. A direction in which the gas pushes the first vertical member 112 and the second vertical member 113 may be referred to as a second direction. A force acting in the second direction may include a tensile force acting in a direction parallel to the direction in which the housings 200 are stacked. For example, the gas inside the case 110 may push the first vertical member 112 forward or push the second vertical member 113 rearward.

The case 110 may receive a force from the outside of the case 110 in the first direction and receive a force from the inside of the case 110 in the second direction. In this instance, the first support bar 500 may be fastened so that the force applied in the first direction is greater than the force applied in the second direction. Hence, the case 110 may be difficult to open by the gas. In addition, the inside of the case 110 is sealed, and thus a fire occurring inside the case 110 can be extinguished by suffocation.

The pad 600 (see FIG. 3) and the spacer 700 (see FIG. 3) may include a material with elasticity. The pad 600 and the spacer 700 may be pressurized by the first support bar 500 and may be in contact with the battery assembly 100. The pad 600 or the spacer 700 may pressurize the first vertical member 112 and the second vertical member 113 of the case 110.

When the second pad 620 pressurizes the first vertical member 112 and the second vertical member 113, the first vertical member 112 and the second vertical member 113 may be in close contact with the first plate 131 of the first support member 130. Hence, the case 110 can be difficult to open by the gas. In addition, the inside of the case 110 is sealed, and thus a fire occurring inside the case 110 can be extinguished by suffocation.

The lower side of the first spacer 710 of the spacer 700 may allow the first vertical member 112 and the second vertical member 113 to be in close contact with the first plate 131 of the first support member 130, in the same manner as the second pad 620. Hence, the case 110 can be difficult to open by the gas. In addition, the inside of the case 110 is sealed, and thus a fire occurring inside the case 110 can be extinguished by suffocation.

Only specific examples of implementations of certain embodiments are described. Variations, improvements and enhancements of the disclosed embodiments and other embodiments may be made based on the disclosure of this patent document.

## Claims

1. A battery module comprising:
a plurality of battery assemblies stacked in one direction;
a first end plate and a second end plate that are respectively disposed on both sides of the plurality of battery assemblies in the one direction; and
a first support bar connecting the first end plate to the second end plate,
wherein each of the plurality of battery assemblies includes:
a battery cell;
a case accommodating the battery cell, an opening being formed in a side of the case; and
a first support member coupled to the opening,
wherein the first support bar is disposed adjacent to the opening of the case and pressurizes the first end plate and the second end plate.

2. The battery module of claim 1, further comprising a pad disposed between two adjacent battery assemblies of the plurality of battery assemblies.

3. The battery module of claim 1, wherein the first support bar includes a plurality of first support bars, and
wherein surface pressure areas respectively formed by the plurality of first support bars are arranged to overlap with each other.

4. The battery module of claim 1, wherein the first support bar is coupled to the first end plate and a central portion of the second end plate, and
wherein the plurality of battery assemblies are disposed in two rows with the first support bar interposed therebetween and are stacked in the one direction.

5. The battery module of claim 4, wherein the plurality of battery assemblies are formed symmetrically based on the first support bar.

6. The battery module of claim 1, further comprising a second support bar connecting an edge of the first end plate to an edge of the second end plate.

7. The battery module of claim 6, wherein each of the first support bar and the second support bar is bolt-coupled to the first end plate and the second end plate.

8. The battery module of claim 6, further comprising a plurality of housings respectively accommodating the plurality of battery assemblies,
wherein the first support bar and the second support bar penetrate the plurality of housings.

9. The battery module of claim 2, wherein the first support member includes:
a first plate disposed inside the case;
a second plate disposed outside the case; and
a connection member connecting the first plate to the second plate and penetrating the opening.

10. The battery module of claim 9, wherein the first plate is in contact with an inner face of the case in the one direction.

11. The battery module of claim 9, wherein the first support member includes an insertion groove which is disposed between the first plate and the second plate and is formed concavely toward the connection member, and
wherein the side of the case is coupled to the insertion groove.

12. The battery module of claim 11, wherein the case includes a clip coupled to the insertion groove, and
wherein the clip includes:
a wing member in contact with the first plate; and
an elastic member extending from the wing member and in contact with the second plate.

13. The battery module of claim 12, wherein the elastic member extends while forming an acute angle with the wing member.

14. The battery module of claim 2, wherein each of the plurality of battery assemblies includes a second support member disposed inside the case and facing the first support member with the battery cell interposed therebetween, and
wherein the second support member faces and is in contact with an inner face of the case in the one direction.

15. The battery module of claim 14, wherein the pad includes a first pad disposed between the second support members of the two adjacent battery assemblies.

16. The battery module of claim 11, wherein the pad includes a second pad disposed between the first support members of the two adjacent battery assemblies, and
wherein the second pad includes:
a central member;
a first protrusion extending from the central member and disposed between the first plates;
a second protrusion extending from the central member and disposed between the second plates; and
third and fourth protrusions which extend from the central member and are respectively coupled to two facing insertion grooves among the insertion grooves of the two adjacent battery assemblies.

17. The battery module of claim 16, wherein the first protrusion is in contact with an outer face of the case,
wherein the second protrusion is in contact with the second plate, and
wherein the third and fourth protrusions are disposed between the case and the second plate and are in contact with the case and the second plate.

18. The battery module of claim 2, wherein the pad includes:
a first pad in contact with another side of the case; and
a second pad in contact with the side of the case,
wherein the first pad is spaced apart from the first pad.

19. The battery module of claim 18, further comprising a spacer disposed between the two adjacent battery assemblies of the plurality of battery assemblies,
wherein the spacer wraps both side faces of the case in the one direction.

20. The battery module of claim 19, wherein the pad and the spacer are provided in plurality and are alternately arranged in the one direction.
